# EUROPEAN PATENT APPLICATION

(11) **EP 3 101 287 A1**
(43) Date of publication of application: **07.12.2016**
(21) Application number: 16172765.6
(22) Date of filing: 02.06.2016
(51) Int. Cl.: F16B 7/02

(54) **MOUNTING DEVICE FOR INSTALLATION AGAINST A SUBSTANTIALLY HORIZONTAL SURFACE AND USE THEREOF**

(30) Priority: 03.06.2015 DK 201570337
(71) Applicant: Labflex A/S, 2730 Herlev (DK)
(72) Inventor: Kirkeby, Kurt Nedergaard, 7620 Lemvig (DK)
(74) Representative: Eupatent.pl

(57) **Abstract**

An assembly unit (1) for mounting in a load bearing ceiling (2), having a first upper tube (3) and a first lower tube (5), both of which are wedging tubes whose wedge-shaped ends (7, 8) face each other. The assembly unit (1) has a fastening mechanism (11) for clamping the first lower tube (5) to the first upper tube (3) to form a rod-shaped element (12). The assembly unit (1) also has a first fitting (13) which has a hollow tube (14'), which tube (14') is designed fully or partially to enclose the rod-shaped element (12). The fastening mechanism locks together the wedging tubes (3, 5) and secures the hollow tube (14') in a given position in relation to the rod-shaped element (12).

## Description

The invention relates to an assembly unit for mounting on an essentially horizontal surface such as a load bearing ceiling, which assembly unit comprises a first and a second hollow tube, wherein both tubes are divided into an upper tube and a lower tube, which upper tube and lower tube are each wedging tubes whose wedge-shaped ends face each other so that the wedging surface of the upper tube faces away from the wedging surface of the lower tube, and wherein the assembly unit further comprises a fastening mechanism in the first and in the second tube for clamping together the wedging surfaces of the lower tubes and the wedging surfaces of the first upper tubes to produce rod-shaped elements.

When service bridges and wall cabinets are to be assembled in laboratories, it is usual for ceiling posts/fittings of a given length, which appears to correspond to the distance required when everything is fully assembled, to be installed in the load bearing ceiling. However, the ceiling is often sloping, thus a good deal of work is required to ensure that the fittings are correctly installed and that service bridges and wall cabinets do not hang at an angle. Moreover, it may be difficult to have the suspended ceiling erected when the fittings have been installed, and their adequate adjustment is therefore impossible since the suspended ceiling conceals the attachment of the fittings to the load bearing ceiling. The possibilities of adjusting the existing ceiling suspensions are therefore extremely limited.

The object of the present invention is therefore to provide an assembly unit which does not suffer from the drawbacks mentioned, or which at least provides a useful alternative to the state of the art.

This is achieved with an assembly unit of the type described in the introduction where the assembly unit further comprises a fitting having two holes, parallel tubes, which tubes are designed in part or in whole to enclose each of the rod-shaped elements, and where the fastening mechanism is designed to secure the hollow tubes in a given position in relation to the rod-shaped elements when the wedging tubes are locked together, the fitting being a U-shaped fitting whose two parallel tubes are open at both ends, and where the tubes are connected to each other by a crossbar.

The assembly unit is therefore fitted to a suitable element in the ceiling such as a metal rail. The upper end of the unit, comprising part of the fastening mechanism, is slid into the rail, where the upper end of a threaded rod is located on which is mounted, preferably welded, a support strut. The threaded rod is enclosed by an upper hollow wedging tube and a lower hollow wedging tube, where a lock nut, located outside the lower edging tube, is fitted opposite the nut in the rail. The threaded rod with nuts therefore joins together the two wedging tubes, and when they are clamped together a rod-shaped element is created. A first fitting, in the form of two hollow tubes, is inserted over each of the wedging tubes from the end where the lock nut is located. The first fitting is the fitting to which the service bridge or wall cabinet is secured either directly or by mounting a profile on the fitting.

When the desired position of the lower part has been determined the lock nuts are tightened. This is done by upward locking of the assembly unit to the rail whilst at the same time pressing the wedging tubes against each other and sliding them laterally until there is resistance against the inner surfaces of the hollow tubes. This locks the first fitting in the desired position whilst at the same time clamping the assembly unit to the ceiling. If subsequent adjustment is required, this is possible by slackening the lock nut and moving the first fitting to the desired position. Moreover, it is also possible to move the assembly unit in the horizontal direction if the rail is fitted with a slot into which the threaded rod can be inserted.

This creates a suspension fitting which can be adjusted not only in the longitudinal direction but which can be pushed backwards and forwards when required, according to the type of rail chosen in which to secure the unit.

The assembly unit is intended primarily to be suspended in a load bearing ceiling surface, but can obviously also be used for other essentially horizontal surfaces, for example concrete elements which project horizontally from a wall.

By using two parallel assembly units, good stability is obtained in the horizontal direction, thus providing a good suspension unit for service bridges etc. By using a U-shaped fitting comprising the two parallel tubes, which tubes are open at both ends, and because the tubes are connected to each other by a crossbar, increased stability is achieved. The crossbar is preferably a T profile which gives the structure considerable stability. Service bridges etc. are therefore secured to the crossbar. Thus by linking the two parallel suspended rod-shaped elements together at the first fitting formed as a U fitting, a simple attachment facility is provided for installing service bridges etc., whilst at the same time rendering the structure rigid and stable.

In a further appropriate embodiment according to Claim 2, the fastening mechanism is provided with a threaded rod and fastening means, wherein the upper tube/s in the end face opposite the respective wedging end/s has/have an upper opening which corresponds essentially to the diameter of the threaded rod, and wherein the end face of the lower tube/s opposite the wedging end has a lower opening which corresponds essentially to the diameter of the threaded rod.

The threaded rod is not necessarily provided with a thread throughout its length, but only in the end areas where the nuts engage. The length of the threaded rod is greater than the total length of the upper and lower wedging tubes in the joined, clamped position.

In a further appropriate embodiment according to Claim 3, the fastening means are provided with a support arm for positioning the assembly unit on an element such as a rail, which support arm grips the threaded rod outside the upper opening. The fastening means are also provided with a lower lock nut, which lower lock nut grips the threaded rod outside the lower opening.

The expression "outside" refers in this context to the fact that the lock nuts are not located inside the wedging tubes but, when tightened, are clamped to the flat outer surfaces of the wedging tubes opposite the oblique surfaces of the wedging tubes. Regarding the upper support arm, it is noted that it is of course pressed against the inner surface of the rail, thus causing the outer surface of the upper tube to be pressed against the outer surface of the rail, locking the assembly unit. The support arm is typically welded to the threaded rod and is typically a piece of flat metal. The support arm may also assume other forms.

In a further appropriate embodiment according to Claim 4, the surfaces of the wedging ends of the upper and lower tube/s have the same inclination, preferably 20-40 degrees, relative to the longitudinal axis I of the rod-shaped element/s 12.

An angle of approximately 30 degrees is preferably chosen because it provides a good sliding angle when the threaded rod and nuts are tightened. At this angle, the amount of force to be exerted for tightening to take place is limited.

In a further appropriate embodiment according to Claim 5, the assembly unit is also provided with an expansion bolt or a rail provided with mounting holes for mounting the rail in the horizontally surface, wherein the rail is provided with a slot running parallel to its longitudinal axis and located diametrically opposite the mounting holes.

By having a slot throughout the length of the rail, it is possible to push the upper support arm mounted on the threaded rod into the slot and securing it in a horizontal position which suits the present situation. By using an expansion bolt, it is possible to carry out an assembly in rooms with lower ceilings since a hole is drilled in the ceiling in which the expansion bolt is fitted and to which the threaded rod is secured.

In a further appropriate embodiment according to Claim 6, the outside diameter of the upper and lower tubes is the same, and the inside diameter of the hollow tube/s is dimensioned so that the hollow tube/s are able to enclose each of the wedging tubes in a loose fit.
This ensures firm locking of the hollow tube/s in the desired position, and hence along the desired length on the assembly unit.

In a further appropriate embodiment according to Claim 7, the end faces of the wedging tubes opposing the wedging surfaces are all flat.
This provides firm clamping of the upper wedging tube against the rail and of the lock nut against the end face of the lower wedging tube.

In a further appropriate embodiment according to Claim 8, the threaded rod is secured to the upper tube above the wedging surface by means of a dolly and an end plug with a central hole for a support rod is threaded to the termination of the upper tube opposite the wedging surface, where the support rod connects the dolly to the support arm so that the end plug and the support arm cam be clamped against or away from each other due to the threaded engagement of the end plug with the termination of the upper tube without affecting the locking together of the wedging tubes to secure the hollow tubes in a given position.

This embodiment ensures, in particular, that the clamping together of the wedging tubes remains independent of the fastening to the ceiling rail. When the wedging tubes are clamped together, the tension in the threaded rod is located between the lower lock nut and the dolly, and the clamping does not therefore affect the fastening between the support arm and the ceiling rail. This makes it possible to screw the end plug down a little, thereby reducing the tension between the end plug and the support arm so that the support arm, together with the assembly unit, can be moved along the rail or moved to another rail. It also makes it possible to slacken the nut at the end of the lower wedging tubes in order to adjust the distance of the U-shaped fitting from the ceiling, so that the levelling of several fittings can be finely adjusted without loosening them from their positions against the ceiling.

As stated in Claim 9, it is also appropriate for the end plug to be provided with a transverse setscrew which enables the end plug to be locked in a given position. This provides a greater guarantee that the end plug will not loosen in time from its clamped position against the rail.

The invention also relates to the use of an assembly unit as described above for fastening and suspending elements such as service bridges which incorporate electric cables, water pipes and gas pipes, for exhaust systems and for the suspension of wall cabinets.

In a further appropriate embodiment, the support arm is formed with a demarcating radial surface and with a length that protects against rotation of over 180 degrees. Typically, the support arm is spot welded to the threaded rod.

The invention will now be explained in detail with reference to the drawing, in which
Fig. 1 a shows an assembly unit according to the invention
Fig. 1b shows a cross-section through the assembly unit shown in Figure 1 a.
Figs. 2a and 2b show parts of the assembly unit according to the invention for forming rod-shaped elements.
Fig. 2c shows the parts shown in Figs. 2a and b joined together to form the rod-shaped element.
Fig. 2d shows a detail view of what is shown in Figure 2c.
Fig. 3a and Fig. 3b show an assembly unit according to the invention in a perspective view having two different lengths.
Fig. 4 shows a second embodiment of an assembly unit according to the invention.
Figs. 5, 6, 7 and 8 show the use of the assembly unit according to the invention for suspending different service bridges under different physical conditions.
Fig. 9 shows a further embodiment of the assembly unit, partly from the side and partly in section and rotated 90 degrees.
Fig. 10 is a 3D representation in an exploded view of the upper end of the upper tube (3, 4).
Fig. 11 is a side view and a sectional view of the assembly unit in operation, and
Fig. 12 shows an enlarged section corresponding to the area circled in Fig. 11.

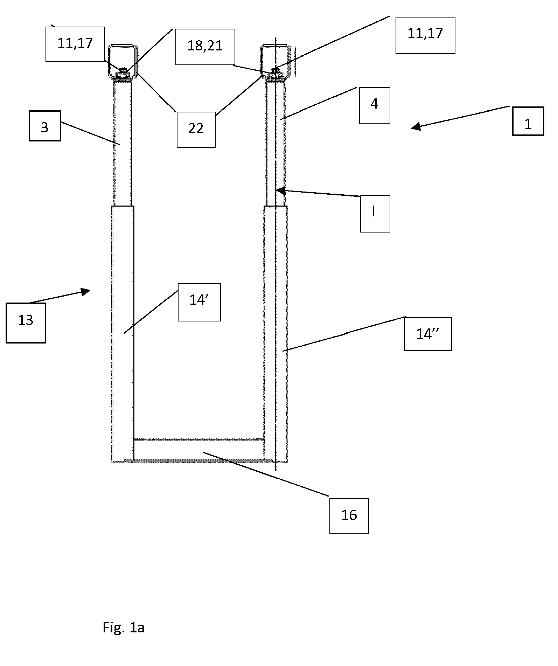

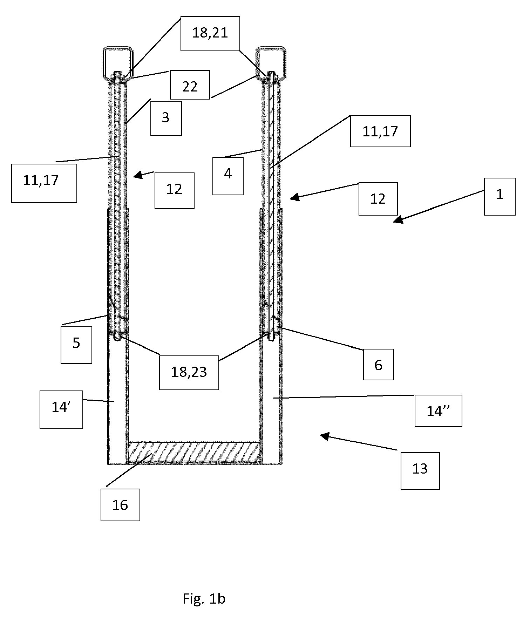

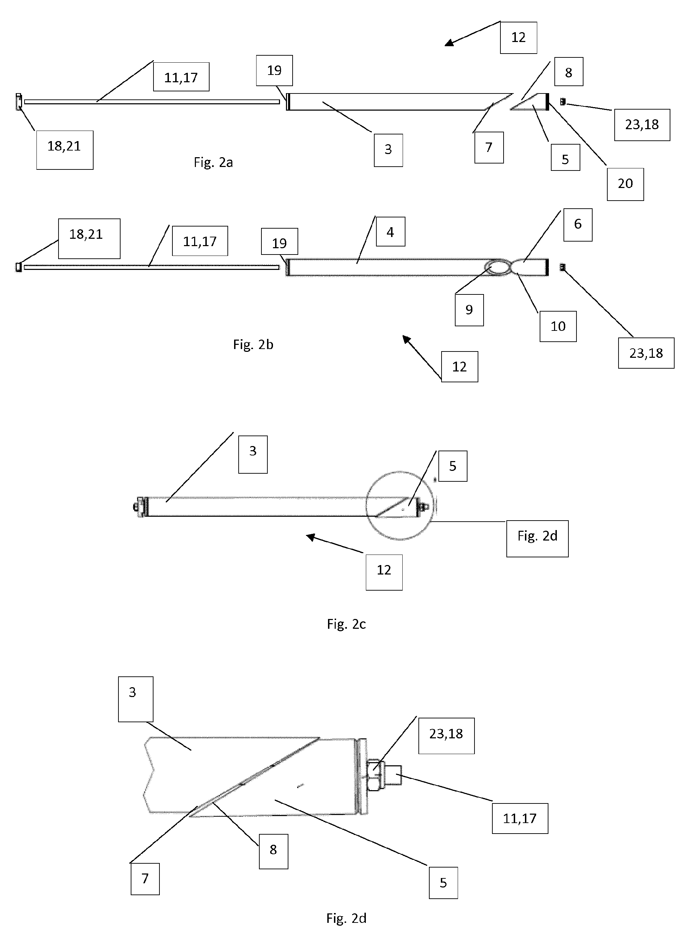

Fig. 1a shows an embodiment of an assembly unit 1 according to the invention, and Fig. 1b shows the same in cross-section only. The assembly unit comprises 2 essentially parallel hollow tubes: a first upper tube 3 and a second upper tube 4, as well as two lower tubes: a first lower tube 5 and a second lower tube 6. All the tubes are so-called wedging tubes, which means that one end face on each tube is wedge-shaped and flat so that when the upper wedging tubes are clamped together with the lower wedging tubes, it is the oblique surfaces on the respective tubes which are clamped against and slide towards each other.
Wedging surface 7 of the first upper tubes 3 faces towards wedging surface 8 of the first lower tube 5 and wedging surface 9 of the second upper tube 4 faces towards wedging surface 10 of the second lower tube 6, as shown in Fig. 2a, b.
Assembly unit 1 also has a fastening mechanism 11 for clamping the first lower tube 5 against the first upper tube 3, and the second lower tube 6 against the second upper tube 4. This forms two rod-shaped elements 12. Rod-shaped element 12 has a longitudinal axis denoted by I. Around each of rod-shaped elements 12 is fitted a hollow tube 14', 14", which forms part of a first fitting 13. The tubes each enclose in the longitudinal direction their rod-shaped elements 12, completely or partially, and in Figs. 1a, b a partial enclosure is shown. The two hollow tubes 14', 14" are linked together by a crossbar 6, here a T-shaped profile. The two hollow tubes 14', 14" do not, however, need to have such a link, but this obviously increases the stiffness of the structure.
Fastening mechanism 11 has a threaded rod 17 with a length that is greater than the total length of each of rod-shaped elements 12, as well as fastening means 18 in the form of a support arm 21 and a lower lock nut 23. The end faces of upper tubes 3, 4, which oppose the respective wedging ends 7, 9 - see Figs. 2a, b - have an upper opening 19, which corresponds essentially to the diameter of threaded rod 17, and threaded rod 17 penetrates opening 19. This part will be supported in a rail 22 and support arm 21 is welded to threaded rod 17 and pushed into rail 22 so that unit 1 is suspended from rail 22 and support arm 21 secures it to rail 22.

The end face of lower tubes 5, 6 opposing wedging ends 8, 10 has a lower opening 20, which also corresponds essentially to the diameter of threaded rod 17. Outside this opening 20 lower lock nut 23 is mounted on threaded rod 17. By screwing on lower lock nut 23 wedging tubes 3, 4, 5 and 6 are locked together. When they are pressed together and slide toward their respective wedging surfaces, the two hollow tubes 14', 14" are secured in a given position in relation to the rod-shaped elements 12 now formed. In this case, the wedging tubes will be pressed out radially until they meet resistance against the inner surfaces of the hollow tubes 14', 14". Wedging ends 7, 8, 9 and 10 of upper tubes 3, 4 and lower tubes 5, 6 have the same inclination, preferably in the range of 20-40 degrees relative to the longitudinal axis I of rod-shaped elements 12. A value of 30 degrees will typically be chosen.

Figs. 2a and 2b show parts of assembly unit 1 for forming rod-shaped elements 12. It has fastening mechanism 11 provided with threaded rod 17 and fastening means 18 in the form of support arm 21 and lower nut 23. The parts also include wedge-shaped tubes 3, 4, 5 and 6 whose oblique surfaces 7, 8, 9 and 10 face each other. Upper opening 19 and lower opening 20 are formed, either because the respective tubes have a partially closed end face with the relevant opening, or because a loose plate with opening 19, 20 is clamped against the respective tubes by means of fastening means 18.

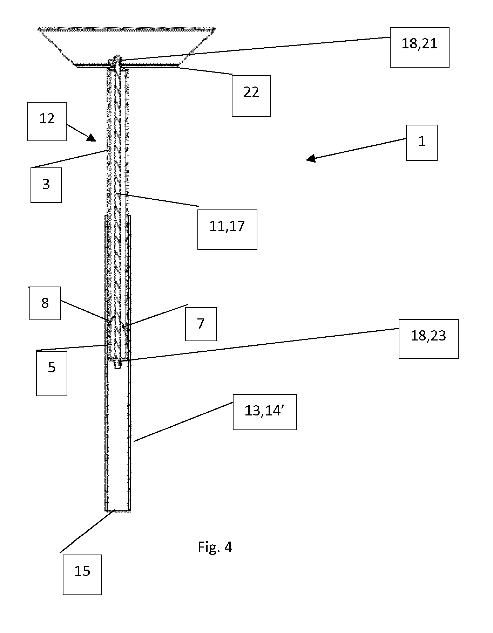

Fig. 2c shows the parts shown in Figs. 2a and b joined together and with tightened lock nut 23, thus forming rod-shaped element 12. The example shows one of rod-shaped elements 12 comprising the first upper and lower tube 3, 5. Fig. 2d shows a detail view of what is shown in Figure 2c. Wedging surface 7 of first upper tube 3 slides and clamps against wedging surface 8 of the first lower tube 5 when lock nut 23 is tightened. The lowest wedging tube 5 is displaced laterally when lock nut 23 is tightened, thus adjusting the height/position of the surrounding hollow tube 14' (not shown in the drawing). Lock nut 23 therefore guarantees stability in all directions and the height and length adjustment of assembly unit 1. This mechanism is the same regardless of whether it is used for what is described above or for the second embodiment described with reference to Fig. 4.

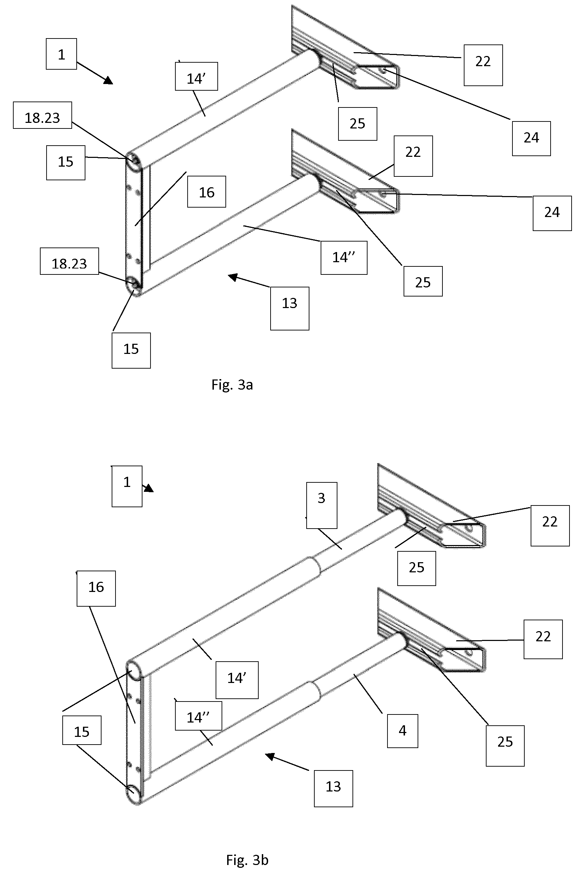

Fig. 3a and Fig. 3b show an assembly unit 1 according to the invention in a perspective view, showing two different lengths: Fig. 3 a shows a short length and Fig. 3b a long length.
Assembly unit 1 is secured to a rail 22 in its upper part with threaded rod 17 and support arm 21 (not shown in the figure). At one end, rail 22 has mounting holes 24 so that rail 22 can be screwed into a ceiling. Opposite this surface, rail 22 is provided with a slot 25 throughout the length of rail 22. When unit 1 is suspended, threaded rod 17, with support arm 21, is slid into rail 22 so that support arm 21 lies inside rail 22. When lower lock nut 23 is tightened, the flat end face of the first upper tube 3 and second upper tube 4 is clamped against the lower surface of rail 22 whilst the position of hollow tubes 14', 14" is maintained, the wedging tubes being clamped together and laterally displaced against the inner surface of hollow tubes 14', 14".
Lower lock nut 23 is tightened through opening 15 at the end of hollow tubes 14', 14" opposing rail 22. In Fig. 3, hollow tubes 14', 14" are displaced as far away from rail 22 as possible, whilst those in Fig. 3a are displaced right up against rail 22. When the position of first fitting 13 has been thus established, first fitting 13 is attached and positioned relative to rail 22 by tightening lock nut 23. Fist fitting 13 has in the example shown a T-rail 16, which connects hollow tubes 14', 14" to each other and stiffens the structure. T-rail 16 is provided with mounting holes for installing service bridges, for example.

Fig. 4 shows a second embodiment of an assembly unit 1 according to the invention. It has one rod-shaped element 12 and is constructed in the same way as described in the above-mentioned figures. The difference between this example and the example explained above is that assembly unit 1 only has one suspension rod and not two, as in the figures shown, which suspension rods are suitably connected to each other by a T-profile.
Assembly unit 1 in Figure 4 therefore has a hollow tube: the first upper tube 3 and the first lower tube 5, both of which are wedging tubes. The wedge-shaped ends face towards each other so that wedging surface 7 of first upper tube 3 faces towards wedging surface 8 of first lower tube 5. Assembly unit 1 is provided with fastening mechanism 11 for clamping first lower tube 5 together with first upper tube 3 for forming rod-shaped elements 12 as described above. First fitting 13 has a hollow tube 14' which fully or partially encloses rod-shaped element 12. Profiles to which elements such as cabinets or the like can be fastened can be welded to hollow tube 14'. Fastening mechanism 11 is therefore designed, when wedging tubes 3, 5 are locked together, to maintain hollow tube 14' in a given position relative to rod-shaped element 12.

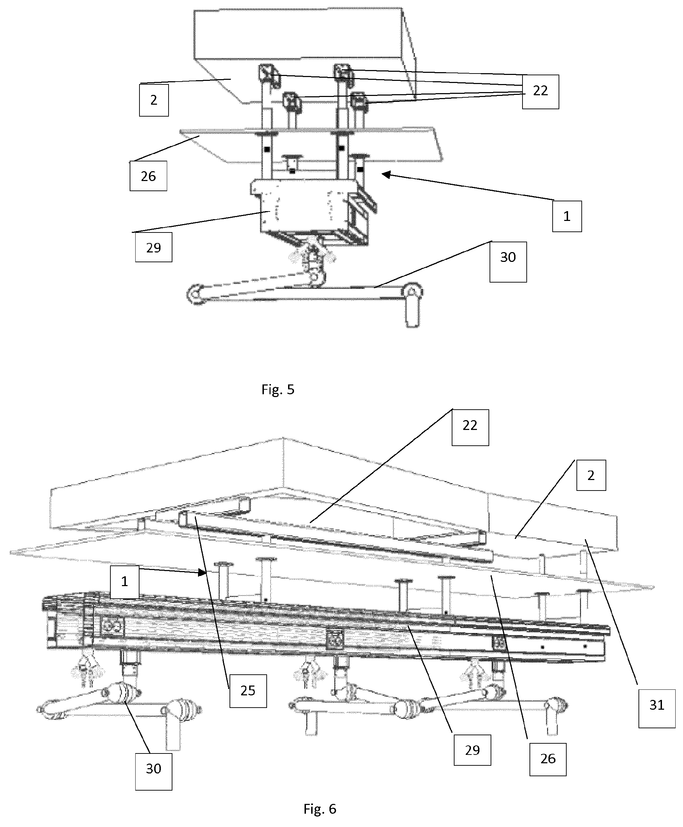

Figs. 5, 6, 7 and 8 show the use of assembly unit 1 according to the invention for suspending different service bridges 29 under different physical conditions. The reference numbers indicated in the figures are the same as indicated above.

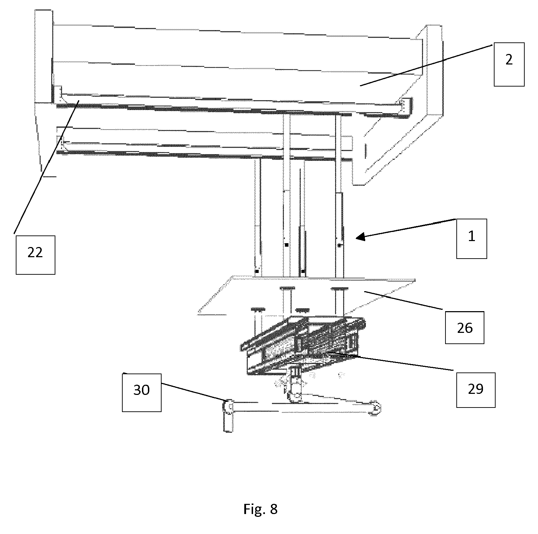

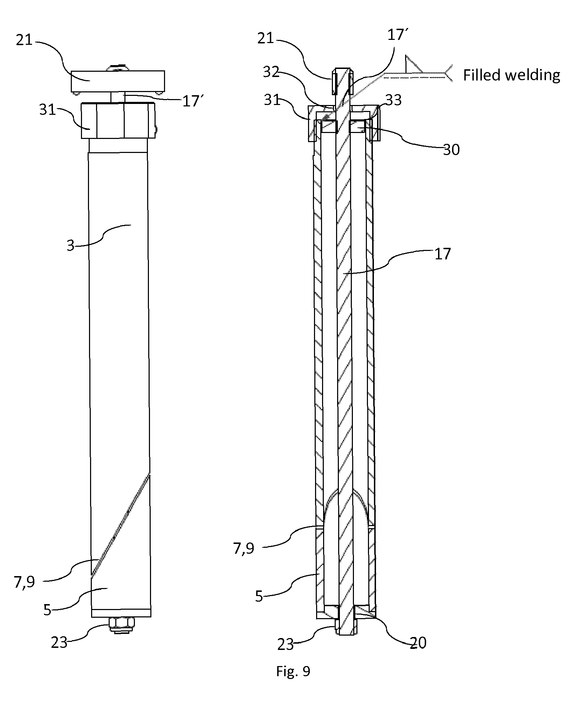

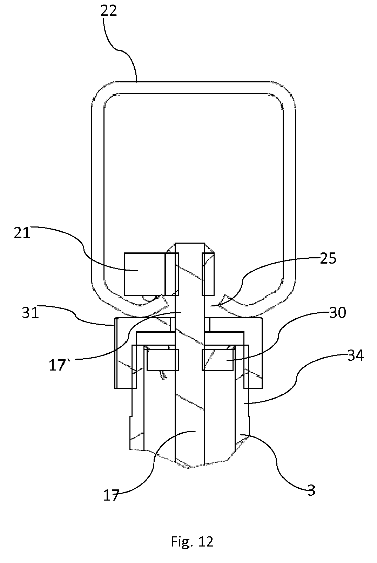

Fig. 5 shows assembly unit 1 as indicated in Fig. 4 for suspending a service bridge 29. A total of 4 separate assembly units 1 are seen mounted in each rail 22. Assembly unit 1 is mounted in a load bearing ceiling and can be mounted before suspended ceiling 26 is installed. The height of the assembly unit is subsequently adjusted to a suitable level by tightening lock nut 23, assembly unit 1 thus being secured to rail 22 placed in ceiling 2 and hollow tube 14' of first fitting 13 is secured in the desired position. Service bridge 29 can then be mounted on assembly unit 1. Different units 30, such as exhaust devices and the like, may depart from service bridge 29. Different components, including electric cables, water pipes, gas feed pipe etc., may be accommodated in service bridge 29.
Fig. 6 shows the use of an assembly unit 1 as described with reference to Figs. 3a, b among other things. Rail 22 in ceiling 2 is provided with a slot 25 so that assembly unit 1 can be moved backwards and forwards. It also shows the fitting of the threaded rod to the ceiling using an expansion bolt 31.

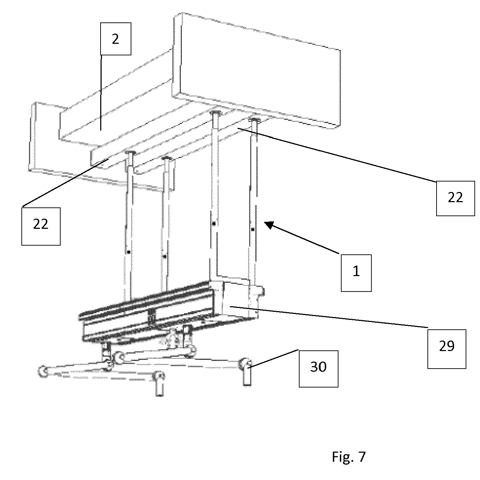

Fig. 7 shows the use of an assembly unit 1 as shown in Fig. 3b, among other things, where unit 1 has its maximum length. In this case, a suspended ceiling is not installed.
In principle, Fig. 8 shows the same as Fig. 7, but here a suspended ceiling is installed with service bridge 29 located underneath it. A unit 30 departs from this.
Assembly unit 1 is shown in Figs. 9 - 12 in a further embodiment in which threaded rod 17 is secured to upper tube 3, 4 above wedging surface 7, 9 via a dolly 30. Dolly 30 has a disc to which threaded rod 17 is secured. Dolly 30 is securely connected to pipe 3, 4 by means of welding, for example, as indicated with the signature in Fig. 9 and the text "filled welding". In this embodiment an end plug 31, with a central hole 32 for a support rod 17', is also threaded to termination 33 of the upper tube opposite wedging surface 7, 9. Support rod 17' connects dolly 30 to support arm 21, so that end plug 31 and support arm 21 can be clamped together or away from each other by the threaded engagement of end plug 31 with termination 33 of the upper tube. This is illustrated in detail in Fig. 12, where it is clear that rail 22 is clamped in between support arm 21 and the upper flat surface of the end plug when end plug 31 is screwed up along thread 34 on the outside at the upper end of the tube. In this structure, a contact surface is secured between the end plug and the rail, corresponding to the width of the rail, and good stability in the structure is achieved.

Here support rod 17' is merely the upper section of threaded rod 17, but in principle, the support rod could be a separate element, e.g. welded to dolly 30 on its upper side.

When wedging tubes 3, 5 are locked together to secure hollow tubes 14', 14" in a given position by tightening nut 23, this is done without affecting the joint between the rail and support rod 17' by clamping the end plug against the rail. This means, conversely, that the end plug can be loosened so that the position along the rail can be adjusted without loosening the securing of the wedging tube sin tubes 14', 14".

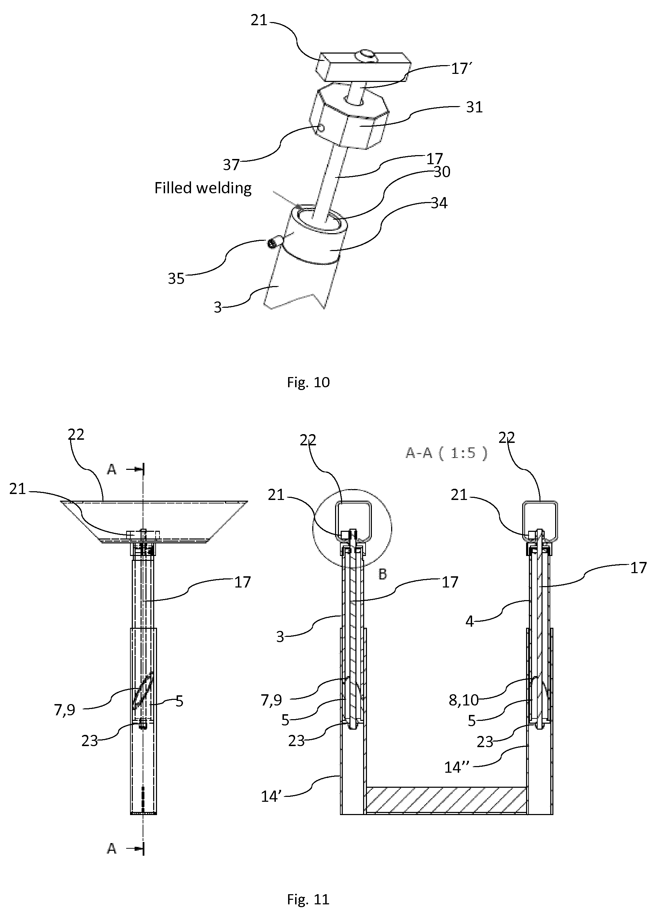

As indicated in Fig. 10, there is a setscrew 35 which corresponds to a threaded hole 37 in the end plug so that the end plug can be secured to thread 34 of the upper tube by tightening transverse setscrew 35. This provides an extra guarantee against being unintentionally loosened in the case of vibrations produced by earthquakes, for example, or from installed motor unit such as exhaust motors.

Securing threaded rod 17 to dolly 30 provides the additional advantage that the weight borne by fitting 13 is transmitted to support rod 17' without loading threaded rod 17 inside tubes 3, 4, 5, 6. This ensures that the threaded rod cannot be extended, when fitting 13 is loaded, to such an extent that the wedging tubes lose the pressure which clamps them against tube 3, 4.

It should be noted that the embodiment described here is realisable together with U-shaped fitting 13 as well as together with a single rod-shaped element and associated single hollow tube.

## Claims

1. An assembly unit (1) for mounting on an essentially horizontal surface such as a load bearing ceiling (2), which assembly unit has a first and a second hollow tube, wherein both tubes are divided into an upper tube (3, 4) and a lower tube (5, 6), which upper tube (3, 4) and lower tube (5, 6) are each wedging tubes whose wedge-shaped ends (7, 8, 9, 10) face each other so that the wedging surface (7, 9) of the upper tube (3, 4) faces the wedging surface (8, 10) of the lower tube (5, 6), and wherein the assembly unit (1) also has a fastening mechanism (11) in the first and second tubes for clamping the wedging surfaces (8, 10) of the lower tubes (5, 6) against the wedging surfaces (7, 9) of the first upper tubes (3, 4) to form rod-shaped elements (12), **characterised in that** the assembly unit (1) also has a fitting (13) provided with two holes and parallel tubes (14', 14"), which tubes (14', 14") are designed completely or partially to enclose each of the rod-shaped elements (12), **in that** the fastening mechanism (11) is designed to maintain the hollow tubes (14', 14") in a given position relative to the rod-shaped elements (12) when the wedging tubes (3, 5) are locked together, wherein the fitting (13) is a U-shaped fitting whose two parallel tubes (14', 14") are open at both ends, and **in that** the tubes (14', 14") are connected to each other by a crossbar (16).

2. The assembly unit (1) according to Claim 1, **characterised in that** the fastening mechanism (11) has a threaded rod (17) and fastening means (18), **in that** the upper tubes (3, 4), in the end face opposing the respective wedging ends (7, 9), have an upper opening (19) which corresponds essentially to the diameter of the threaded rod (17), and **in that** the end faces of the lower tubes opposing the wedging end has a lower opening (20) which corresponds essentially to the diameter of the threaded rod (17).

3. The assembly unit (1) according to Claim 2, **characterised in that** the fastening means (18) has a support arm (21) for mounting the assembly unit (1) on an element such as a rail (22), which support arm (21) grips the threaded rod (17) outside the upper opening (19), and **in that** the fastening means (18) also have a lower lock nut (23), which lower lock nut (23) grips the threaded rod (17) outside the lower opening (20).

4. The assembly unit (1) according to any one of the previous claims, **characterised in that** the surfaces of the wedging ends (7, 8, 9, 10) for the upper (3,4) and lower (5,6) tubes have the same inclination, preferably 20-40 degrees, relative to the longitudinal axis I of the rod-shaped elements (12).

5. The assembly unit (1) according to any one of the previous claims, **characterised in that** the assembly unit (1) also has an expansion bolt or a rail (22) provided with mounting holes (24) for fitting the rail (22) in the horizontal surface (2), and **in that** the rail (22) is provided with a slot (25) positioned parallel with its longitudinal axis, which slot is diametrically opposite the mounting holes (24).

6. The assembly unit (1) according to any one of the previous claims, **characterised in that** the outside diameter of the upper (3, 4) and lower tubes (5, 6) is the same, and **in that** the inside diameter of the hollow tubes (14', 14") is dimensioned so that the hollow tubes (14', 14") are designed to enclose at least parts of each of the wedging tubes (3, 4, 5, 6) in a loose fit.

7. The assembly unit (1) according to any one of the previous claims, **characterised in that** the end faces of the wedging tubes opposing the wedging surfaces (7, 8, 9, 10) are all flat.

8. The assembly unit (1) according to Claim 3, **characterised in that** the threaded rod (17) is secured to the upper tube (3, 4) above the wedging surface (7, 9) by means of a dolly (30), and **in that** an end plug (31) with a central hole (32) for a support rod (17') is threaded to the termination (33) of the upper tube opposing the wedging surface (7, 9), wherein the support rod (17') connects the dolly (30) to the support arm (21) so that the end plug (31) and the support arm (21) may be clamped to or away from each other by the threaded engagement of the end plug (31) with the termination (33) of the upper tube without affecting the locking together of the wedging tubes (3, 5) to secure the hollow tubes (14', 14") in a given position.

9. The assembly unit (1) according to Claim 8, **characterised in that** the end plug can be secured to the thread of the upper tube by means of a transverse setscrew (35).

10. The use of an assembly unit (1) according to any one of the previous claims for securing and suspending elements such as service bridges (29) accommodating electric cables, water pipes, gas pipes and exhaust systems, as well as for suspending wall cabinets.
